# EUROPEAN PATENT APPLICATION

(11) **EP 3 588 059 A1**
(43) Date of publication of application: **01.01.2020**
(21) Application number: 19182323.6
(22) Date of filing: 25.06.2019
(51) Int. Cl.: G01N 21/05, G01N 21/03

(54) **FLOW CELL**

(30) Priority: 25.06.2018 JP 2018119574
(71) Applicant: SHINKO ELECTRIC INDUSTRIES CO., LTD., Nagano-shi, Nagano 381-2287 (JP)
(72) Inventor: SHIMIZU, Yuichiro, Nagano-shi, Nagano 381-2287 (JP); OI, Kiyoshi, Nagano-shi, Nagano 381-2287 (JP)
(74) Representative: Zimmermann & Partner Patentanwälte mbB

(57) **Abstract**

A flow cell (1) includes: a cell main body (11) having a first surface (11a); a flow path (12) provided in the cell main body (11); a convex portion (13) provided on a second surface (11b) of the cell main body opposite to the first surface (11a) via the flow path (12), and having a curved surface (13a) protruding toward a side opposite to the flow path (12); and a reflector (14) formed on the curved surface (13a). Light incident on the flow path (12) from the first surface (11a) is reflected by the reflector (14) on the curved surface (13a) and is receivable on the first surface side.

## Description

This application claims priority from Japanese Patent Applications No. 2018-119574 filed on June 25, 2018, the entire contents of which are herein incorporated by reference.

### BACKGROUND

### 1. Technical Field

The present disclosure relates to a flow cell.

### 2. Background Art

Analysis using optics has been performed in various fields such as life science, drug development and environmental evaluation. For example, absorptiometry, fluorometry, etc. are available as methods of such analysis. These methods are performed to irradiate a sample inside a flow path of a flow cell with measurement light with an ultraviolet wavelength, a visible wavelength, an infrared wavelength, or the like and analyze a wavelength characteristic of light transmitted through or reflected on the sample.

An optical analysis apparatus using a flow cell is constituted by lots of individual components such as a light irradiator, a light detector, a light condensing lens and a mirror. The optical analysis apparatus is required to have a space where the separate components can be disposed. For this reason, it is difficult to reduce the size of the optical analysis apparatus (see e.g., JP-A-2002-514308).

### SUMMARY

An object of this disclosure is to provide a flow cell by use of which the size of an optical analysis apparatus can be reduced.

Certain embodiments provide a flow cell. The flow cell includes: a cell main body having a first surface; a flow path provided in the cell main body; a convex portion provided on a second surface of the cell main body opposite to the first surface via the flow path, and having a curved surface protruding toward a side opposite to the flow path; and a reflector formed on the curved surface. Light incident on the flow path from the first surface is reflected by the reflector on the curved surface and is receivable on the first surface side.

### BRIEF DESCRIPTION OF THE DRAWINGS

Fig. 1 is a perspective view illustrating a flow cell according to an embodiment of the present invention;
Fig. 2 is a sectional view illustrating the flow cell according to the embodiment; and
Fig. 3 is a schematic view illustrating an optical analysis apparatus according to the embodiment.

### DETAILED DESCRIPTION

The present disclosure will be described below with reference to the drawings. Incidentally, in the respective drawings, like constituent sections will be referred to by like signs respectively and correspondingly so that duplicate description thereof may be omitted.

### (Flow Cell)

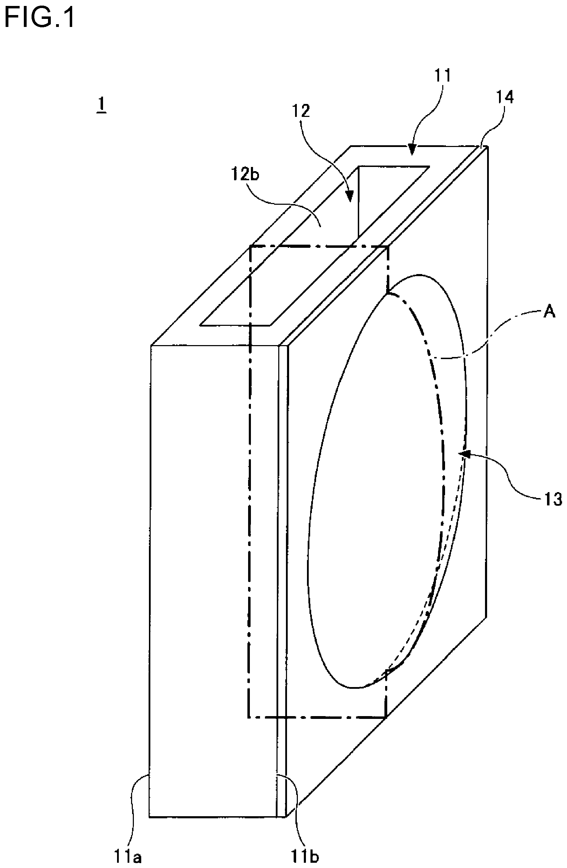

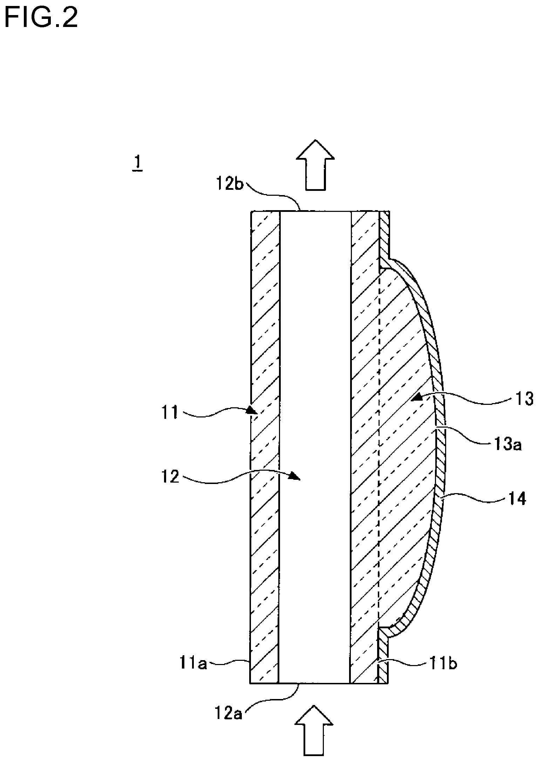

Fig. 1 is a perspective view illustrating a flow cell according to an embodiment of the present invention. Fig. 2 is a sectional view illustrating the flow cell according to the embodiment. Fig. 2 shows a longitudinal section of Fig. 1 taken along a portion of a one-dot chain line A.

With reference to Fig. 1 and Fig. 2, the flow cell 1 has a cell main body 11, a flow path 12, a convex portion 13, and a reflector 14.

The cell main body 11 is a section where the flow path 12 and the convex portion 13 are formed, and which is, for example, formed into the shape of a quadrangular prism. A material high in transmittance at a wavelength of light incident on the cell main body 11 is selected as the material of the cell main body 11. Specifically, a glass material or a plastic material is selected in consideration of the wavelength of the light incident on the cell main body 11. However, it is preferable to use quartz glass high in transmittance of light having a comparatively wide wavelength range from ultraviolet to infrared.

The flow path 12 is a path in which a sample (a liquid or a gas which is an inspection target) flows. The flow path 12 penetrates the cell main body 11, and has one opening end serving as an inlet 12a through which the sample is introduced from the outside into the flow path 12, and the other opening end serving as an outlet 12b through which the sample flowing inside the flow path 12 is discharged from the flow path 12 to the outside. Incidentally, two arrows in Fig. 2 designate a direction in which the sample flows inside the flow path 12.

A transverse sectional shape of the flow path 12 (a sectional shape in a direction perpendicular to the arrow direction of Fig. 2) can be, for example, a rectangle. However, the transverse sectional shape of the flow path 12 may be a circle, an ellipse, or the like. In order to form the flow path 12 in the cell main body 11, a method for machining the cell main body 11 to make a through hole therein may be used, or a method for bonding (e.g. fusing) four independent plate-like materials to one another may be used.

The cell main body 11 includes a first surface 11a, and a second surface 11b opposite to the first surface 11a through the flow path 12. The first surface 11a is a flat surface. The convex portion 13 protruding toward an opposite side to the flow path 12 is provided on the second surface 11b. The convex portion 13 is provided with a curved surface 13a on an opposite side to the second surface 11b. Incidentally, the cell main body 11 and the convex portion 13 are integrated with each other. However, a boundary between the cell main body 11 and the convex portion 13 is indicated by a broken line in Fig. 2 for convenience sake.

The reflector 14 is formed on the curved surface 13a of the convex portion 13. The reflector 14 may extend from the curved surface 13a of the convex portion 13 to the second surface 11b of the cell main body 11. A material high in reflectance at a wavelength of light incident on the cell main body 11 is selected as the material of the reflector 14. Specifically, a metal material such as silver (Ag), gold (Au) or aluminum (Al) can be used as the material of the reflector 14. The reflector 14 can be formed, for example, by a sputter method. The reflector 14 can be, for example, not thicker than about 1 µm.

The reflector 14 is formed on the curved surface 13a of the convex portion 13. Thus, light entering the flow path 12 from the first surface 11a of the cell main body 11 can be reflected by the reflector 14 on the curved surface 13a and then received on the first surface 11a side of the cell main body 11.

There is no particular limitation in the shape of the convex portion 13 as long as the shape has a function by which light entering the flow path 12 from the first surface 11a of the cell main body 11 can be reflected by the reflector 14 formed on the curved surface 13a, and then received on the first surface 11a side of the cell main body 11. The convex portion 13 may be, for example, shaped like a dome. Here, the domed shape means a shape whose protrusion amount gradually increases from the circumference toward the center. In order to form the convex portion 13 on the second surface 11b of the cell main body 11, a method for forming the second surface 11b side of the cell main body 11 thickly in advance and then machining (e.g. grinding) the second surface 11b side of the cell main body 11 may be used, or a method for bonding (e.g. fusing) the convex portion 13 as a separate body to the second surface 11b of the cell main body 11 may be used.

It is preferable that the curved surface 13a of the convex portion 13 is a paraboloid. When the reflector 14 is formed on the curved surface 13a which is a paraboloid, light incident on the cell main body 11 from various directions on the first surface 11a side of the cell main body 11 can be reflected by the reflector 14 so as to be condensed into one point (a focal point of the convex portion 13) on the first surface 11a side of the cell main body 11 by the curved surface 13a. Accordingly, when the curved surface 13a of the convex portion 13 is a paraboloid, a light detector is disposed at the focal point of the convex portion 13 when the flow cell 1 is used in an optical analysis apparatus. In this manner, a light irradiator can be disposed at any position as long as light radiated by the light irradiator can enter the flow path 12 from the first surface 11a of the cell main body 11.

Incidentally, in a case where the curved surface 13a of the convex portion 13 is not a paraboloid, the light detector may be disposed at a suitable position to receive reflected light of light radiated from the light irradiator when the flow cell 1 is used in the optical analysis apparatus.

Thus, the convex portion 13 can serve as a light condensing lens, and the reflector 14 can serve as a mirror. Since the convex portion 13 and the reflector 14 are integrated with the cell main body 11, the number of components can be smaller than that in a background-art flow cell in which a convex portion 13, a reflector 14 and a cell main body 11 are disposed separately from one another. Thus, the size of the flow cell 1 can be reduced.

### (Optical Analysis Apparatus)

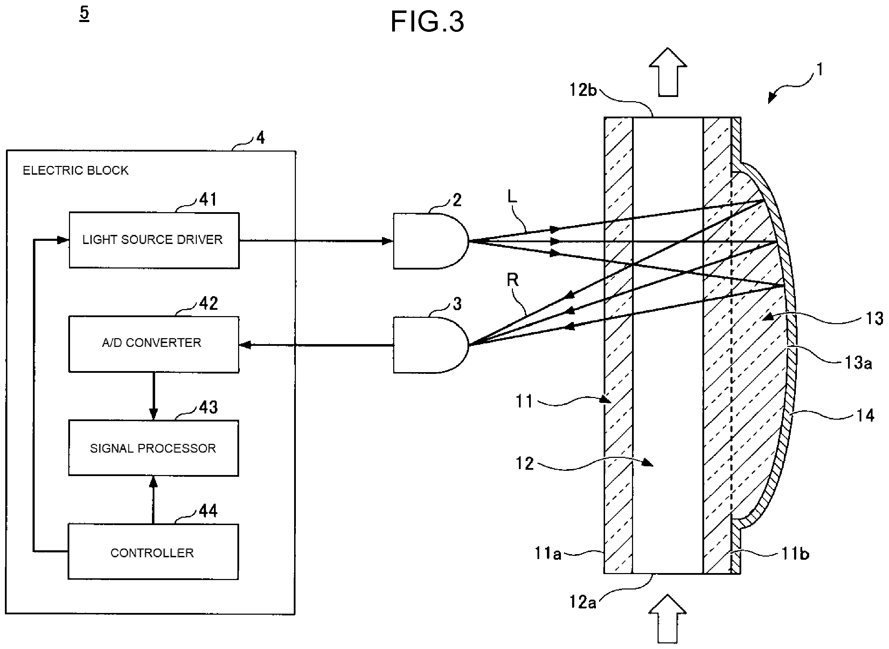

Fig. 3 is a schematic view illustrating an optical analysis apparatus according to the present embodiment. With reference to Fig. 3, the optical analysis apparatus 5 is an apparatus for performing absorptiometry or fluorometry, and has the flow cell 1, a light irradiator 2, a light detector 3, and an electric block 4. The electric block 4 has a light source driver 41, an A/D converter 42, a signal processor 43, and a controller 44.

The light irradiator 2 is disposed on the first surface 11a side of the flow cell 1, and has a function of irradiating the flow cell 1 with light. Light emitting elements such as a light emitting diode, a super luminescence diode and a laser diode can be used as the light irradiator 2. The light emitting elements are preferred because a peak width of a spectrum of light emitted by any of the light emitting elements is so narrow that the light does not have to be monochromatized by a spectrometer but can be used directly as measurement light.

The light detector 3 is disposed on the first surface 11a side of the flow cell 1, and has a function of receiving reflected light of the light with which the flow cell 1 is irradiated by the light irradiator 2 and converting the received reflected light into an analog voltage. For example, a light receiving element such as a photodiode, an avalanche photodiode, a CCD (Charge Coupled Device) or a CMOS (Complementary Metal Oxide Semiconductor) can be used as the light detector 3. It is preferable that a light receiving element high in sensitivity to the wavelength of the light emitted from the light irradiator 2 is selected as the light detector 3.

The light source driver 41 of the electric block 4 supplies a current to the light irradiator 2 in response to a command of the controller 44 so as to activate the light irradiator 2 to emit light. The light source driver 41 may activate the light irradiator 2 to emit light continuously or to emit light in pulses.

The A/D converter 42 converts a detection signal from the analog voltage into which the light received by the light detector 3 has been converted, into a digital signal and sends the converted digital signal to the signal processor 43. The signal processor 43 has a function of performing absorptiometry or fluorometry based on the digital signal obtained from the A/D converter 42. The controller 44 is configured to perform overall control on the optical analysis apparatus 5. For example, the controller 44 is configured to send a command to the light source driver 41 or the signal processor 43.

The signal processor 43 and the controller 44 can be configured to, for example, include a CPU (Central Processing Unit), an ROM (Read Only Memory), an RAM (Random Access Memory), a main memory, etc.

In this case, various functions of the signal processor 43 and the controller 44 can be implemented by a program that has been stored on the ROM etc., and that is read by the main memory and executed by the CPU. The signal processor 43 and the controller 44 may be partially or entirely implemented by only hardware. In addition, the signal processor 43 and the controller 44 may be physically constituted by devices etc.

The light irradiator 2, the light detector 3 and the electric block 4 can be fixed to the first surface 11a side of the cell main body 11 by a holder having a predetermined shape.

When the light source driver 41 supplies a current to the light irradiator 2 in response to a command of the controller 44 in a state in which a sample is flowing in the arrow direction inside the flow path 12 of the flow cell 1 in Fig. 3, measurement light L emitted by the light irradiator 2 is radiated on the flow cell 1 from the first surface 11a side of the cell main body 11. Incidentally, the sample is made to flow inside the flow path 12 in order to prevent air bubbles from staying inside the flow path 12.

The measurement light L radiated on the flow cell 1 is transmitted through the sample flowing inside the flow path 12, and then reflected as reflected light R by the reflector 14 on the curved surface 13a. The reflected light R is transmitted through the inside of the flow path 12 again, and then received by the light detector 3 disposed on the first surface 11a side of the cell main body 11. A light quantity of the reflected light R received by the light detector 3 reflects an absorbance of the sample flowing inside the flow path 12.

The light detector 3 converts the received reflected light R into an analog voltage corresponding to the light quantity thereof, generates a detection signal from the analog voltage, and then sends the generated detection signal to the A/D converter 42. The A/D converter 42 converts the detection signal into a digital signal, and sends the converted digital signal to the signal processor 43, which can, for example, calculate an absorbance of the sample flowing inside the flow path 12, based on the digital signal obtained from the A/D converter 42.

In Fig. 3, there is one light irradiator 2. However, a plurality of light irradiators 2 may be disposed. For example, the light irradiators 2 emitting light with different wavelengths can be disposed. Particularly, when the curved surface 13a of the convex portion 13 is a paraboloid, the light irradiator 2 can be disposed at any place as long as the light detector 3 is disposed at a focal position of the convex portion 13 in advance. Even in this case, the reflected light R returns to the position of the light detector 3. Accordingly, the light irradiators 2 can be disposed easily. The light irradiators 2 can be disposed on the circumference centering the light detector 3, for example, in view of a direction of a normal line to the first surface 11 a of the cell main body 11.

Thus, the optical analysis apparatus 5 uses the flow cell 1. Accordingly, the number of components in the optical analysis apparatus 5 can be smaller than that in the background-art optical analysis apparatus. Thus, the size of the optical analysis apparatus 5 can be reduced. As a result, by use of the optical analysis apparatus 5, optical analysis can be performed at various places so that measurement results can be obtained quickly.

The present embodiment can be summarized to be described as follows.
1) A flow cell (1) comprises:
   a cell main body (11) having a first surface (11a);
   a flow path (12) that is provided in the cell main body;
   a convex portion (13) having a curved surface (13a) that is provided on a second surface (11b) of the cell main body so as to protrude outward from the second surface, wherein the second surface is opposite to the first surface through the flow path; and
   a reflector (14) that is formed on the curved surface, wherein the reflector is configured to reflect light that has passed through the flow path and arrived at the curved surface toward the first surface.
2) The convex portion may have a domed shape.
3) The curved surface may be a paraboloid.
4) The reflector may be configured to reflect the light toward a focal point of the convex portion. The focal point may be opposed to the first surface and positioned outside the flow cell.
5) The cell main body and the convex portion may be made of quartz glass.
6) An optical analysis apparatus (5) comprises:
   the flow cell (1);
   a light irradiator (2) that is disposed to face the first surface and configured to emit the light; and
   a light detector (3) that is disposed at a focal point of the convex portion and configured to receive the light reflected by the curved surface.

While the preferred embodiments have been described in detail heretofore, the disclosure is not limited to the embodiments described above, and hence, various modifications or replacements can be made to the embodiments without departing from the scope of claims to be made below.

## Claims

1. A flow cell (1) comprising:
a cell main body (11) having a first surface (11a);
a flow path (12) provided in the cell main body (11);
a convex portion (13) provided on a second surface (11b) of the cell main body (11) opposite to the first surface (11a) via the flow path (12), and having a curved surface (13a) protruding toward a side opposite to the flow path (12); and
a reflector (14) formed on the curved surface (13a); wherein
light incident on the flow path (12) from the first surface (11a) is reflected by the reflector (14) on the curved surface (13a) and is receivable on the first surface side.

2. The flow cell (1) according to claim 1, wherein the convex portion (13) has a domed shape.

3. The flow cell (1) according to claim 1 or 2, wherein the curved surface (13a) is a paraboloid.

4. The flow cell (1) according to any one of claims 1 to 3, wherein the cell main body (11) and the convex portion (13) are made of quartz glass.

5. The flow cell (1) according to any one of claims 1 to 4, wherein the reflector (14) is configured to reflect light toward a focal point of the convex portion (13), the focal point being opposed to the first surface (11a) and positioned outside the flow cell (1).

6. An optical analysis apparatus (5) comprises:
a flow cell (1) as defined in any of the claims 1 to 5;
a light irradiator (2) that is disposed to face the first surface (11a) of the cell main body (11) of the flow cell (1) and configured to emit light; and
a light detector (3) that is disposed at a focal point of the convex portion (13) and configured to receive the light reflected by the curved surface (13a) of the convex portion (13).
